# EUROPEAN PATENT APPLICATION

(11) **EP 4 293 350 A1**
(43) Date of publication of application: **20.12.2023**
(21) Application number: 21925748.2
(22) Date of filing: 22.09.2021
(51) Int. Cl.: G01N 27/62, H01J 49/16

(54) **METHOD FOR MASS SPECTROMETRY OF ORGANIC SYNTHETIC COMPOUND**

(30) Priority: 10.02.2021 JP 2021019934
(71) Applicant: Shimadzu Corporation, Kyoto-shi Kyoto 604-8511 (JP)
(72) Inventor: SHIMA, Keisuke, Kyoto-shi, Kyoto 604-8511 (JP); FUKUYAMA, Yuko, Kyoto-shi, Kyoto 604-8511 (JP)
(74) Representative: Müller-Boré & Partner Patentanwälte PartG mbB
(86) International application number: PCT/JP2021/034727
(87) International publication number: WO 2022/172500

(57) **Abstract**

The present invention provides a method for mass spectrometry of a negatively charged organic synthetic compound, and a matrix that can be used in said method. A method for mass spectrometry of a negatively charged organic synthetic compound, the method comprising using, as a liquid matrix, an ionic liquid comprising an amine ion and an acidic group-containing organic substance ion. For example, the amine is 3-aminoquinoline (3-AQ), and the acidic group-containing organic substance is p-coumaric acid (p-CA). The negatively charged organic synthetic compound to be analyzed is, for example, an organic synthetic polymer compound or a complex compound.

## Description

### TECHNICAL FIELD

The present invention relates to a method for mass spectrometry of an organic synthetic compound.

### BACKGROUND ART

Various substances are analyzed by MALDI-MS (Matrix Assisted Laser Desorption/Ionization Mass Spectrometry).

A MALDI-TOF MS (Matrix Assisted Laser Desorption/Ionization-Time of Flight Mass Spectrometry) apparatus is frequently used for measurement of an organic synthetic compound by using a mass spectrometer. In the MALDI mass spectrometry, an ionization agent called a matrix is selected according to the kind of a sample to be measured. In the MALDI mass spectrometry of an organic synthetic compound, as a matrix, a general solid matrix such as 2,5-dihydroxybenzoic acid, α-cyano-4-hydroxycinnamic acid, or sinapinic acid is used. For example, Macromolecules 1995, 28, 8548-8551 (Non-Patent Document 1) discloses a MALDI-TOF MS analysis of polystyrene sulfonic acid.

### CITATION LIST

### PATENT DOCUMENTS

Patent Document 1: JP 2008-261824 A

### NON-PATENT DOCUMENTS

Non-Patent Document 1: Macromolecules 1995, 28, 8548-8551
Non-Patent Document 2: Anal. Chem. 2008, 80, 2171-2179
Non-Patent Document 3: Rapid Commun. Mass Spectrom. 2011, 25, 1152-1158

### SUMMARY OF THE INVENTION

### PROBLEMS TO BE SOLVED BY THE INVENTION

In the MALDI mass spectrometry of an organic synthetic compound, it is required that a suitable matrix is selected according to the kind of a sample to be analyzed. Selection of a suitable matrix sometimes takes a process of trial and error.

In the MALDI mass spectrometry of an organic synthetic compound, there is a demand for a method for acquiring excellent data of mass spectrometry analysis from the viewpoint of a S/N ratio and a resolution capability, and a matrix that can be used in said method.

In the MALDI mass spectrometry of a negatively charged organic synthetic compound among the organic synthetic compounds, it is difficult to acquire excellent data of mass spectrometry analysis from the viewpoint of a S/N ratio and a resolution capability. For this reason, there is a demand for a method for acquiring excellent data of mass spectrometry analysis from the viewpoint of a S/N ratio and a resolution capability in the MALDI mass spectrometry of, in particular, a negatively charged organic synthetic compound among the organic synthetic compounds, and a matrix that can be used in said method.

On the other hand, it is known that an ionic liquid matrix is used as a matrix in the MALDI mass spectrometry of a peptide and a sugar chain. For example, JP 2008-261824 A (Patent Document 1) describes a MALDI mass spectrometry method for analyzing a sugar chain with the use of, as a matrix, an ionic liquid (TMG/CA, or G₃CA) comprising an amine (1,1,3,3-tetramethylguanidine) ion and a p-coumaric acid ion (Anal. Chem. 2008, 80, 2171-2179 (Non-Patent Document 2)).

It is an object of the present invention to provide a method for mass spectrometry of a negatively charged organic synthetic compound, and a matrix that can be used in said method.

### MEANS FOR SOLVING THE PROBLEMS

The present inventors have intensively studied, and as a result, found that excellent data of mass spectrometry analysis with a high S/N ratio and a high resolution capability can be acquired by using an ionic liquid as a matrix in the MALDI mass spectrometry of a negatively charged organic synthetic compound, which has led to the completion of the present invention.

The present invention includes the following aspects.

A method for mass spectrometry of a negatively charged organic synthetic compound, the method comprising using, as a liquid matrix, an ionic liquid comprising an amine ion and an acidic group-containing organic substance ion.

A liquid matrix for MALDI mass spectrometry of a negatively charged organic synthetic compound, the liquid matrix comprising an ionic liquid comprising an amine ion and an acidic group-containing organic substance ion.

### EFFECTS OF THE INVENTION

According to the present invention, an ionic liquid comprising an amine ion and an acidic group-containing organic substance ion is used as a liquid matrix, when a negatively charged organic synthetic compound is analyzed by mass spectrometry. By this, excellent data of mass spectrometry analysis with a high S/N ratio and a high resolution capability can be acquired. According to the present invention, in particular, even if the organic synthetic compound to be analyzed is a negatively charged, excellent data of mass spectrometry analysis with a high S/N ratio and a high resolution capability can be acquired. Thus, the present invention has a significant advantage.

The present invention provides a liquid matrix for MALDI mass spectrometry of a negatively charged organic synthetic compound, the liquid matrix comprising an ionic liquid comprising an amine ion and an acidic group-containing organic substance ion.

The present invention is particularly directed to a MALDI mass spectrometry.

### BRIEF DESCRIPTION OF THE DRAWINGS

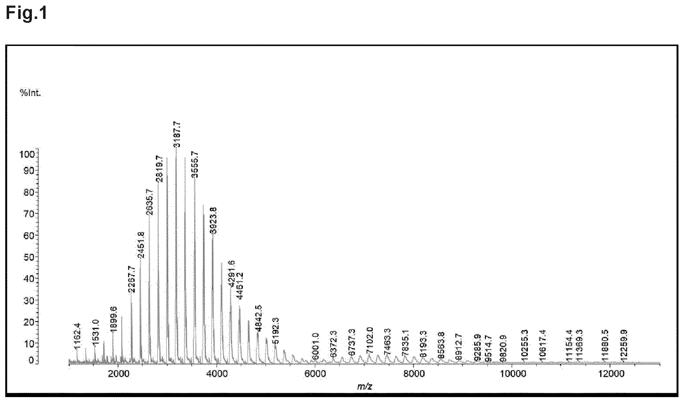

[Fig. 1] Fig. 1 shows a mass spectrum of a sodium polystyrene sulfonate in negative mode when an ionic liquid comprising 3-aminoquinoline (3-AQ)/p-coumaric acid (CA) was used as a matrix in Example 1, wherein a horizontal axis represents mass/charge (m/z) and a vertical axis represents a relative ionic strength (% Int.).

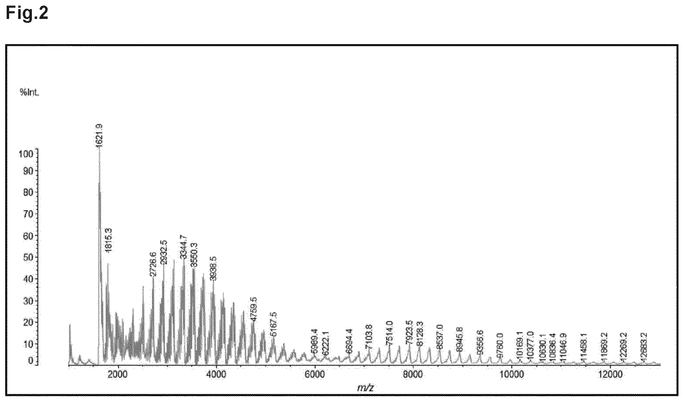

[Fig. 2] Fig. 2 shows a mass spectrum of a sodium polystyrene sulfonate in negative mode when 2,5-dihydroxybenzoic acid (DHB) was used as a matrix in Comparative Example 1, wherein a horizontal axis represents mass/charge (m/z) and a vertical axis represents a relative ionic strength (% Int.).

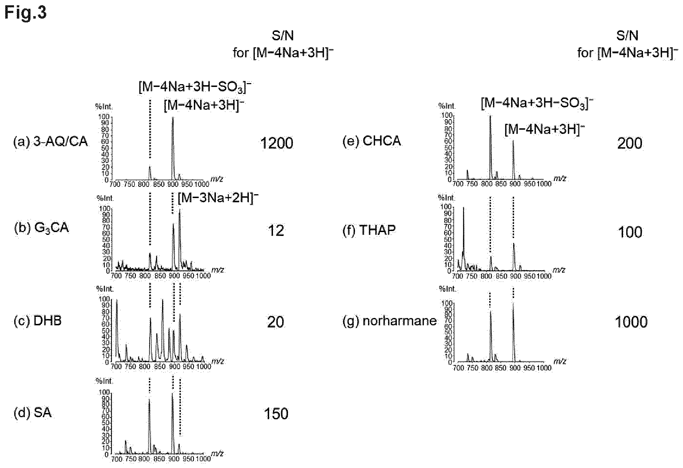

[Fig. 3] Fig. 3 (a) shows a mass spectrum of, in particular, molecular related ions of copper (II) phthalocyanine-3,4',4",4"'-tetrasulfonic acid tetrasodium salt in negative mode when a liquid matrix 3-AQ/CA comprising 3-aminoquinoline (3-AQ) and p-coumaric acid (CA) was used in Example 2;
Fig. 3 (b) shows a mass spectrum of, in particular, molecular related ions of copper (II) phthalocyanine-3,4',4",4"'-tetrasulfonic acid tetrasodium salt in negative mode when a liquid matrix G₃CA comprising p-coumaric acid (CA) and 1, 1,3,3-tetramethylguanidium (TMG) was used as a matrix in Example 2; and further,
Figs. 3 (c) to (g) show each mass spectrum of, in particular, molecular related ions of copper (II) phthalocyanine-3,4',4",4"'-tetrasulfonic acid tetrasodium salt in negative mode when each general matrix 2,5-dihydroxybenzoic acid (2,5-DHB), sinapinic acid (SA), α-cyano-4-hydroxycinnamic acid (CHCA), 2,4,6-trihydroxyacetophenone (THAP), or norharmane was used as a matrix in Comparative Example 2;
   wherein a horizontal axis represents mass/charge (m/z) and a vertical axis represents a relative ionic strength (% Int.), and a value of each S/N ratio of [M-4Na+3H]⁻ is indicated in the right side of the each spectrum.

### MODES FOR CARRYING OUT THE INVENTION

### [Object to be analyzed by Mass Spectrometry]

In the present invention, an object to be analyzed by mass spectrometry is an organic synthetic compound. The organic synthetic compound is not particularly limited, and includes various type of organic synthetic compounds in a wide scope. An organic synthetic polymer compound is a molecule with a high molecular weight. And, the organic synthetic polymer compound is a molecule having a structure comprising multiple repeating units obtained from a molecule with a low molecular weight, that is, the organic synthetic polymer compound is a compound generated by polymerization of a monomer(s) (i.e., polymerization product of a monomer(s)). When the synthetic polymer is analyzed by a MALDI mass spectrometer, the synthetic polymer is detected as a peak group comprising multiple peaks obtained at a constant interval based on mass value of the monomer, in a mass spectrum. Examples of the organic synthetic polymer compound include polyolefine based polymers in a broad sense including a polystyrene, a polystyrene sulfonic acid, a poly (acrylic acid), a poly (methacrylic acid), a poly acrylate such as a poly methyl acrylate, a poly methacrylate such as a poly methyl methacrylate, a polyethylene, a polypropylene, a poly vinyl chloride, a polyacrylonitrile; polyesters such as a polyethylene terephthalate, a poly lactic acid; polyurethanes; polyamides such as a nylon; polyimides; phenol resins; urea resins, and the like. Needless to say, the organic synthetic polymer compounds may include various type of polymers as well as the above mentioned polymers. It does not matter whether the organic synthetic compound is a homopolymer or a copolymer. It is hard to be ionized especially for a negatively charged organic synthetic polymer compound in a MALDI mass spectrometry among the organic synthetic polymer compounds.

Further, the organic synthetic compound. as an object to be analyzed by mass spectrometry also includes a synthetic complex compound, that is not a polymer compound, such as copper (II) phthalocyanine-3,4',4",4"'-tetrasulfonic acid tetrasodium salt. It is hard to be ionized especially for a negatively charged organic synthetic complex compound in a MALDI mass spectrometry, as in the case of copper (II) phthalocyanine-3,4',4",4"'-tetrasulfonic acid tetrasodium salt.

Further, an object to be analyzed by mass spectrometry also includes a mixture sample of the organic synthetic compounds to each other.

Among the organic synthetic compounds as an object to be analyzed by mass spectrometry, an organic synthetic compound where a sulfonic acid and/or a carboxylic acid exists in said compound (in case of free acid, and in case of salt with a counter cation such as sodium ion) is negatively charged, such as a polystyrene sulfonic acid, a poly (acrylic acid), a poly (methacrylic acid), a poly lactic acid; or the like. It is hard to be ionized for a negatively charged organic synthetic compound like this in a MALDI mass spectrometry. For this reason, in the MALDI mass spectrometry of these compounds, it has been difficult to acquire excellent data of mass spectrometry analysis from the viewpoint of a S/N ratio and a resolution capability, by using a general solid matrix such as 2,5-dihydroxybenzoic acid, α-cyano-4-hydroxycinnamic acid, sinapinic acid, or the like.

Furthermore, among the organic synthetic polymers as an object to be analyzed by mass spectrometry, it is hard to be ionized for an organic synthetic polymer with a high average molecular weight as well as an organic synthetic polymer with a high poly dispersity index (Mw/Mn).

### [Liquid Matrix]

In the present invention, an ionic liquid is used as a matrix. The ionic liquid refers to a substance that is present in a liquid state at a room temperature and is, in reality, a salt. In the present invention, a matrix that is an ionic liquid is expressed as a liquid matrix.

More specifically, as a liquid matrix, an ionic liquid that comprises an amine ion and an acidic group-containing organic substance ion is used. Either one of the amine and the acidic group-containing organic substance absorbs a laser light having a wavelength selected from an ultraviolet region to a visible region.

The above mentioned amine is not particularly limited, and can be selected from 1,1,3,3-tetramethylguanidine (TMG), n-butyl amine (BA), ethyl amine, N,N-diethyl amine (DEA), N,N-diethyl aniline, N,N-diethyl methyl amine, diethyl benzene amine, N,N-dimethyl amine, triethyl amine, tri-n-butyl amine, tri-n-propyl amine, ethanol amine, polyether tailed triethyl amine, polyester tailed triethyl amine, aniline, 2,4-dinitroaniline, pyridine, 2-pyridinepropanol (2PP), 2-ethylpyridine (2EP), 2-amino-4-methyl-5-nitropyridine, 3-aminoquinoline (3-AQ), 3-hydroxypyridine, 1-methylimidazole, 1-butyl-3-methylimidazole, 1-(1-hydroxypropyl)-3-methylimidazole, 1,3-dimethylimidazole, 1,5-diaminonaphthalene, 6-aza-2-thiothymine, carbolines (norharman, harman, harmine, harmol, Harmaline, harmalol, and the like), and the like.

Meanwhile, the above mentioned acidic group-containing organic substance is not particularly limited, and can be selected from p-coumaric acid (p-CA, trans-4-hydroxycinnamic acid), α-cyano-4-hydroxycinnamic acid (4-CHCA), α-cyano-3-hydroxycinnamic acid, 2,5-dihydroxybenzoic acid (DHB), 4-hydroxybenzoic acid, p-hydroxybenzoic acid, p-hydroxyphenylpyruvic acid, 3-hydroxypicolinic acid, 3,5-dimethoxy-4-hydroxycinnamic acid (sinapinic acid), 4-hydroxy-3-methoxycinnamic acid (ferulic acid), caffeic acid (3,4-dihydroxycinnamic acid), 5-methoxysalicylic acid, 2-(4-hydroxyphenylazo)benzoic acid (HABA), nicotinic acid, picolinic acid, 3-aminopicolinic acid, 3-hydroxypicolinic acid, 2-amino benzoic acid, 3-amino-4-hydroxybenzoic acid, 2,4,6-trihydroxyacetophenone (THAP), 1,4-dihydro-2-naphthoic acid, 3-indole acrylic acid, indole-2-carboxylic acid, thioglycolic acid, and the like.

As a liquid matrix, an ionic liquid that comprises a combination of any ion selected from the amines and any ion selected from the acidic group-containing organic substances is used. Further, multiple kinds of the amines or multiple kinds of the acidic group-containing organic substances may be selected.

For example, a combination where the amine is 3-aminoquinoline (3-AQ) or 1,1,3,3-tetramethylguanidine (TMG) and the acidic group-containing organic substance is p-coumaric acid (p-CA) may be used. More preferably, as the liquid matrix, an ionic liquid (3-AQ/CA) that comprises 3-aminoquinoline (3-AQ) ion and p-coumaric acid ion (CA) may be used.

In the present invention, a molar ratio between the amine and the acidic group-containing organic substance that constitute the liquid matrix is not particularly limited, and may be a mixture ratio by which an ionic liquid can be formed. For example, the molar ratio may be set so that the liquid matrix contains the amine and the acidic group-containing organic substance in a molar ratio of, for example, 1 : 5 to 20 : 1, or 1 : 1 to 20 : 1. When an a S/N ratio is taken into consideration, there is a more preferable case where the liquid matrix may contain the amine and the acidic group-containing organic substance in a molar ratio of 1 : 1 to 10 : 1, or 3 : 1 to 10 : 1, .in particular, 7 : 1 to 10 : 1. Each concentration of the amine and the acidic group-containing organic substance in the ionic liquid may be appropriately determined by the person skilled in the art.

### [Preparation of Liquid Matrix]

A method for preparing the liquid matrix is not particularly limited. A specific preparation method may be implemented in accordance with a conventional ionic liquid preparation method. One of the simplest preparation methods is, for example, a method in which the amine as a source of an amine ion constituting an ionic liquid and the acidic group-containing organic substance as a source of an acidic group-containing substance ion constituting an ionic liquid are mixed and reacted.

The preparation of a liquid matrix is described below in more detail, by way of an example of a case where the amine is 3-aminoquinoline (3-AQ) and the acidic group-containing organic substance is p-coumaric acid (p-CA).

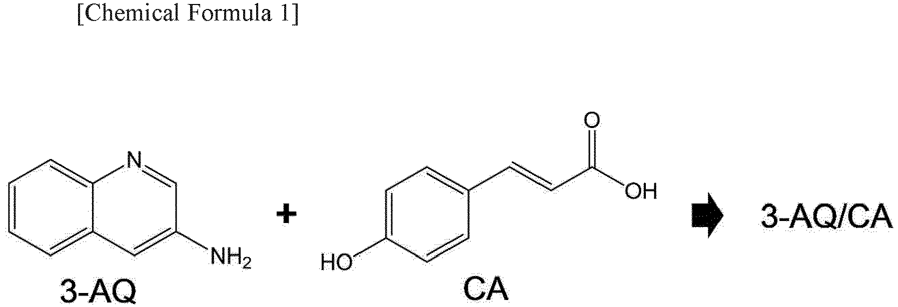

In order to react both the substances with each other, p-coumaric acid may be added to 3-aminoquinoline, or 3-aminoquinoline may be added to p-coumaric acid. The reaction between both the substances can be performed in a solvent. Therefore, at least one of 3-aminoquinoline and p-coumaric acid may be previously prepared as a solution, and then, p-coumaric acid may be added to a 3-aminoquinoline solution, or 3-aminoquinoline may be added to a p-coumaric acid solution. Alternatively, 3-aminoquinoline and p-coumaric acid may be added to a solvent at the same time. The mixing of both the substances can be performed at an ordinary temperature.

The ratio between 3-aminoquinoline and p-coumaric acid that should be reacted with each other is not particularly limited. For example, 3-aminoquinoline and p-coumaric acid may be mixed in a molar ratio of, for example, 1 : 5 to 20 : 1, or 1 : 1 to 20 : 1. When an S/N ratio is taken into consideration, there is a more preferable case where 3-aminoquinoline and p-coumaric acid may be mixed in a molar ratio of, for example, 1 : 1 to 10 : 1, or 3 : 1 to 10 : 1, .in particular, 7 : 1 to 10 : 1. Each concentration of both the substances to be reacted in a solvent may be appropriately determined by the person skilled in the art.

The solvent used on this occasion is not particularly limited., and examples of the solvents may include acetonitrile (ACN), an aqueous solution of acetonitrile (ACN) [for example, an aqueous 50 (v/v) % acetonitrile (ACN) solution], methanol, an aqueous solution of methanol, and the like. The solvent used may be suitably selected by the person skilled in the art.

When the reaction is performed in a solvent, the solvent can be removed after the reaction. The removal of the solvent can be performed by distillation, preferably by distillation under reduced pressure. After the removal of the solvent, a liquid substance can be obtained as an ionic liquid. On the other hand, when the solvent used for the reaction can be used also as a matrix solvent (that will be described later), there is a case where the solvent may not be removed.

### [Formation of Spot for Mass Spectrometry]

When the liquid matrix according to the present invention is used, a droplet of a mixed solution containing the liquid matrix and the object (an organic synthetic compound) to be analyzed by mass spectrometry is formed on a plate for mass spectrometry, and then, a solvent is removed (evaporated) to form a spot for mass spectrometry to be irradiated with laser.

The liquid matrix and the object (an organic synthetic compound) to be analyzed by mass spectrometry shall be finally in the form of a mixed solution at the time when a droplet is formed on a plate for mass spectrometry. The droplet of the mixed solution containing the liquid matrix and the object (an organic synthetic compound) to be analyzed by mass spectrometry can be prepared by a pre-mix method or an on-target mix method.

The pre-mix method is a method in which a mixed solution containing the liquid matrix and the object (an organic synthetic compound) to be analyzed by mass spectrometry is previously prepared, and then, the mixed solution is dropped onto a plate for mass spectrometry to obtain a droplet of the mixed solution. The mixed solution can be obtained by mixing a solution of the liquid matrix and a solution of the object (an organic synthetic compound) to be analyzed by mass spectrometry. These solutions may be mixed, for example, in the same volume.

On the other hand, the on-target mix method is a method in which a solution of the liquid matrix and a solution of the object (an organic synthetic compound) to be analyzed by mass spectrometry are prepared separately, and the respective solutions are then dropped onto the same position in an overlay manner on a plate for mass spectrometry to obtain a droplet of a mixed solution.

As a solvent for the matrix, any conventionally-used solvent can be used without particular limitation. For example, an aqueous solution containing an organic solvent such as acetonitrile, methanol, or ethanol in water may be used. The concentration of the organic solvent in this aqueous solution is, for example, 10% by volume to 90% by volume, preferably 30% by volume to 80% by volume, more preferably 33% by volume to 75% by volume, and one example thereof is about 50% by volume.

As a solvent for the object to be analyzed by mass spectrometry, any conventionally-used solvent can be used without particular limitation. For example, water, or an aqueous solution containing an organic solvent such as acetonitrile, methanol, or ethanol in water may be used. The concentration of the organic solvent in this aqueous solution is, for example, 10% by volume to 90% by volume, preferably 30% by volume to 80% by volume, more preferably 33% by volume to 75% by volume, and one example thereof is about 50% by volume.

The amount of the liquid matrix contained in the droplet of the mixed solution of the liquid matrix and the object (an organic synthetic compound) to be analyzed by mass spectrometry may be, for example, 1 nmol/µL to 10 µmol/µL, preferably 10 nmol/µL to 1 µmol/µL. On the other hand, the amount of the object (an organic synthetic compound) to be analyzed by mass spectrometry contained in the droplet of the mixed solution is not particularly limited, but an acceptable amount is, for example, 0.1 µg to 1.0 µg per one mixed droplet.

It is to be noted that the volume of the droplet of the mixed solution to be used in order to obtain one spot for mass spectrometry may be, for example, 0.1 µL to 10 µL, preferably 0.5 µL to 1.5 µL, and a specific example thereof may be about 0.5 µL or about 1 µL.

As the plate for mass spectrometry, various kinds of plates such as a stainless steel target plate usually used for MALDI mass spectrometry or a chemically or physically surface treated target plate can be used. Also, a plate for mass spectrometry is preferably used which is subjected to physical surface treatment, such as polishing treatment or mirror finish, so that its surface has desired surface roughness.

### [Mass Spectrometer]

A mass spectrometer to be used in the present invention is not particularly limited as long as the mass spectrometer is combined with a MALDI (Matrix Assisted Laser Desorption/Ionization) ion source. Examples of such a mass spectrometer include a MALDI-TOF (Matrix Assisted Laser Desorption/Ionization-Time of Flight) mass spectrometer, a MALDI-IT (Matrix Assisted Laser Desorption/Ionization-Ion Trap) mass spectrometer, a MALDI-IT-TOF (Matrix Assisted Laser Desorption/Ionization-Ion Trap-Time Of Flight) mass spectrometer, a MALDI-FTICR (Matrix Assisted Laser Desorption/Ionization-Fourier Transform Ion Cyclotron Resonance) mass spectrometer, and the like.

### EXAMPLES

Hereinbelow, the present invention will be specifically described with reference to the following examples, but is not limited to these examples.

3-Aminoquinoline (3-AQ) manufactured by Sigma-Aldrich Co. LLC and p-coumaric acid (CA) manufactured by Sigma-Aldrich Co. LLC were used, respectively.

Sodium polystyrene sulfonate manufactured by Sigma-Aldrich Co. LLC was used. 2,5-Dihydroxybenzoic acid (2,5-DHB) manufactured by SHIMADZU GLC Ltd. was used.

### [Example 1: Analysis of Sodium Polystyrene Sulfonate Using 3-AQ/CA]

(1) A 3-AQ solution that contained 1 µmol/µL of 3-aminoquinoline (3-AQ) in an aqueous solution of 50 % (v/v) acetonitrile (ACN) and 2 mM ammonium phosphate, and, a CA solution that contained 0.1 µmol/µL of p-coumaric acid (CA) in an aqueous solution of 50 % (v/v) acetonitrile (ACN) and 2 mM ammonium phosphate were mixed in a ratio of 1 : 1 (v/v) to prepare a 3-AQ/CA matrix solution.
(2) An aqueous solution of sodium polystyrene sulfonate with a concentration of 1 mg/mL was prepared as an object to be analyzed. The resulting solution was used as a sample solution.
(3) Each of 0.5 µL of the 3-AQ/CA matrix solution prepared in (1) and 0.5 µL of the sodium polystyrene sulfonate sample solution prepared in (2) was dropped onto a stainless steel MALDI plate (Shimadzu), and then, the solvent was volatilized to obtain a mixed solution (a mixed droplet) of the matrix and the sample (on-target mix method).
(4) Analysis was performed by AXIMA Confidence (Shimadzu/Kratos, UK) in Linear negative mode.

Fig. 1 shows a mass spectrum of the sodium polystyrene sulfonate when the 3-AQ/CA matrix solution was used wherein the 3-AQ/CA ratio was 1 : 1 (v/v).

From the Fig. 1, when the ionic liquid 3-AQ/CA was used as the liquid matrix, an excellent mass spectrum of the sodium polystyrene sulfonate, that was a negatively charged organic synthetic compound, was obtained with a S/N ratio of 100 or more.

### [Comparative Example 1: Analysis of Sodium Polystyrene Sulfonate Using 2,5-DHB]

(1) A 2,5-dihydroxybenzoic acid (2,5-DHB) solution that contained 20 mg/mL of 2,5-dihydroxybenzoic acid (2,5-DHB) in an aqueous solution of 50 % (v/v) acetonitrile (ACN) and 0.1 % TFA was prepared. The resulting solution was used as a DHB matrix solution.
(2) An aqueous solution of sodium polystyrene sulfonate with a concentration of 1 mg/mL was prepared as an object to be analyzed. The resulting solution was used as a sample solution.
(3) Each of 0.5 µL of the DHB matrix solution prepared in (1) and 0.5 µL of the sodium polystyrene sulfonate sample solution prepared in (2) was dropped onto a stainless steel MALDI plate (Shimadzu) to obtain a mixed solution (on-target mix method).
(4) Analysis was performed by AXIMA Confidence (Shimadzu/Kratos, UK) in Linear negative mode.

Fig. 2 shows a mass spectrum of the sodium polystyrene sulfonate when the 2,5-dihydroxybenzoic acid (DHB) was used as a matrix. The obtained mass spectrum of the sodium polystyrene sulfonate, that was a negatively charged organic synthetic compound, indicated a S/N ratio of 20 or less. The S/N ratio was inferior to that of the mass spectrum of Fig. 1.

### [Example 2: Analysis of Copper (II) Phthalocyanine-3,4',4",4"'-Tetrasulfonic Acid Tetrasodium Salt]

(1) A 3-AQ solution that contained 1 µmol/µL of 3-aminoquinoline (3-AQ) in an aqueous solution of 50 % (v/v) acetonitrile (ACN) and 2 mM ammonium phosphate, and, a CA solution that contained 0.1 µmol/µL of p-coumaric acid (CA) in an aqueous solution of 50 % (v/v) acetonitrile (ACN) and 2 mM ammonium phosphate were mixed in a ratio of 1 : 1 (v/v) to prepare a 3-AQ/CA matrix solution.
(2) In methanol, p-coumaric acid (CA) and 1,1,3,3-tetramethylguanidium (TMG) were mixed in a ratio of 1 : 3 (mol/mol) to obtain a liquid matrix G3CA. The liquid matrix G3CA was dissolved with a concentration of 100 mg/mL in an aqueous solution of 50 % (v/v) acetonitrile (ACN) and 2 mM ammonium phosphate to prepare a G3CA matrix solution.
(3) An aqueous solution of copper (II) phthalocyanine-3,4',4",4"'-tetrasulfonic acid tetrasodium salt with a concentration of 1 mg/mL was prepared as an object to be analyzed. The resulting solution was used as a sample solution.
(4) Each of 0.5 µL of the 3-AQ/CA matrix solution prepared in (1) or the G3CA matrix solution prepared in (2), and 0.5 µL of the copper (II) phthalocyanine-3,4',4",4"'-tetrasulfonic acid tetrasodium salt sample solution prepared in (3) was dropped onto a stainless steel MALDI plate (Shimadzu), and then, the solvent was volatilized to obtain a mixed solution (a mixed droplet) of the matrix and the sample (on-target mix method).
(5) Analysis was performed by AXIMA Confidence (Shimadzu/Kratos, UK) in Linear negative mode.

Fig. 3 (a) shows a mass spectrum of the copper (II) phthalocyanine-3,4',4",4‴-tetrasulfonic acid tetrasodium salt when the 3-AQ/CA matrix solution was used, and Fig. 3 (b) shows a mass spectrum of the copper (II) phthalocyanine-3,4',4",4"'-tetrasulfonic acid tetrasodium salt when the G3CA matrix solution was used, respectively.

From the Fig. 3 (a), when the liquid matrix 3-AQ/CA was used, an excellent mass spectrum of molecular related ions of the negatively charged copper (II) phthalocyanine-3,4',4",4"'-tetrasulfonic acid tetrasodium salt was obtained wherein desorption of a sulfo group (a sulfone group, sulfonic acid group) was relatively suppressed, with a S/N ratio of 1,000 or more, and with a relatively high sensitivity. Furthermore, from the Fig. 3 (b), when the liquid matrix G3CA was used, a mass spectrum of molecular related ions of the negatively charged copper (II) phthalocyanine-3,4',4",4"'-tetrasulfonic acid tetrasodium salt was obtained wherein the desorption of a sulfo group (a sulfone group, sulfonic acid group) was relatively suppressed.

### [Comparative Example 2: Analysis of Copper (II) Phthalocyanine-3,4',4",4"'-Tetrasulfonic Acid Tetrasodium Salt]

(1) A general solid matrix 2,5-dihydroxybenzoic acid (2,5-DHB) (manufactured by LaserBio Labs) was dissolved with a concentration of 10 mg/mL in an aqueous solution of 50 % (v/v) acetonitrile (ACN) to prepare a DHB matrix solution.
(2) A general solid matrix sinapinic acid (SA) (manufactured by LaserBio Labs) was dissolved with a concentration of 10 mg/mL in an aqueous solution of 50 % (v/v) acetonitrile (ACN) to prepare a SA matrix solution.
(3) A general solid matrix α-cyano-4-hydroxycinnamic acid (CHCA) (manufactured by LaserBio Labs) was dissolved with a concentration of 10 mg/mL in an aqueous solution of 50 % (v/v) acetonitrile (ACN) to prepare a CHCA matrix solution.
(4) A general solid matrix 2,4,6-trihydroxyacetophenone (THAP) (manufactured by Sigma) was dissolved with a concentration of 10 mg/mL in an aqueous solution of 50 % (v/v) acetonitrile (ACN) to prepare a THAP matrix solution.
(5) A general solid matrix norharmane (manufactured by Sigma) was dissolved with a concentration of 10 mg/mL in an aqueous solution of 50 % (v/v) acetonitrile (ACN) to prepare a norharmane matrix solution.
(6) An aqueous solution of copper (II) phthalocyanine-3,4',4",4"'-tetrasulfonic acid tetrasodium salt with a concentration of 1 mg/mL was prepared as an object to be analyzed. The resulting solution was used as a sample solution.
(7) Each of 0.5 µL of the each matrix solution prepared in (1) to (5), and 0.5 µL of the copper (II) phthalocyanine-3,4',4",4"'-tetrasulfonic acid tetrasodium salt sample solution prepared in (6) was dropped onto a stainless steel MALDI plate (Shimadzu) to obtain a mixed solution (on-target mix method).
(8) Analysis was performed by AXIMA Confidence (Shimadzu/Kratos, UK) in Linear negative mode.

Figs. 3 (c) to (g) show each mass spectrum of copper (II) phthalocyanine-3,4',4",4‴-tetrasulfonic acid tetrasodium salt when the each matrix solution.

From the Figs. 3 (c) to (g), when the each matrix solution was used, a mass spectrum of molecular related ions of the negatively charged copper (II) phthalocyanine-3,4',4",4‴-tetrasulfonic acid tetrasodium salt was obtained. However, in the Figs. 3 (c) to (g), peaks of the molecular related ions were detected at lower S/N ratios, and ions caused by desorption of a sulfo group (a sulfone group, sulfonic acid group) were detected at a relatively higher ionic strength as compared to when the 3-AQ/CA matrix solution was used in the Fig. 3 (a). Furthermore, when the each matrix solution was used in the Figs. 3 (c) to (g), ions caused by desorption of a sulfo group (a sulfone group, sulfonic acid group) were detected at a relatively higher ionic strength as compared to when the G3CA matrix solution was used in the Fig. 3 (b).

From the results of Figs. 3 (a) to (g), it was confirmed that a mass spectrum of molecular related ions of copper (II) phthalocyanine-3,4',4",4"'-tetrasulfonic acid tetrasodium salt is obtained in a more excellent form when the 3-AQ/CA matrix solution or the G3CA matrix solution is used, and in particular, a mass spectrum of molecular related ions of copper (II) phthalocyanine-3,4',4",4"'-tetrasulfonic acid tetrasodium salt is obtained in a most excellent form when the 3-AQ/CA matrix solution is used, as compared to when the conventional general matrix solution is used.

The present invention includes, for example, the following aspects.
(1) A method for mass spectrometry of a negatively charged organic synthetic compound, the method comprising using, as a liquid matrix, an ionic liquid comprising an amine ion and an acidic group-containing organic substance ion.
(2) The method for mass spectrometry according to the above (1), wherein the amine is selected from the group consisting of 3-aminoquinoline (3AQ), 1,1,3,3-tetramethylguanidine (TMG), n-butyl amine (BA), ethyl amine, N,N-diethyl amine (DEA), N,N-diethyl aniline, N,N-diethyl methyl amine, diethyl benzene amine, N,N-dimethyl amine, triethyl amine, tri-n-butyl amine, tri-n-propyl amine, ethanol amine, polyether tailed triethyl amine, polyester tailed triethyl amine, aniline, 2,4-dinitroaniline, pyridine, 2-pyridinepropanol (2PP), 2-ethylpyridine (2EP), 2-amino-4-methyl-5-nitropyridine, 3-aminoquinoline (3-AQ), 3-hydroxypyridine, 1-methylimidazole, 1-butyl-3-methylimidazole, 1-(1-hydroxypropyl)-3-methylimidazole, 1,3-dimethylimidazole, 1,5-diaminonaphthalene, 6-aza-2-thiothymine, and carbolines.
(3) The method for mass spectrometry according to the above (1) or (2), wherein the acidic group-containing organic substance is selected from the group consisting of p-coumaric acid (p-CA), α-cyano-4-hydroxycinnamic acid (4-CHCA), α-cyano-3-hydroxycinnamic acid, 2,5-dihydroxybenzoic acid (DHB), 4-hydroxybenzoic acid, p-hydroxybenzoic acid, p-hydroxyphenylpyruvic acid, 3-hydroxypicolinic acid, 3,5-dimethoxy-4-hydroxycinnamic acid (sinapinic acid), 4-hydroxy-3-methoxycinnamic acid (ferulic acid), caffeic acid (3,4-dihydroxycinnamic acid), 5-methoxysalicylic acid, 2-(4-hydroxyphenylazo)benzoic acid (HABA), nicotinic acid, picolinic acid, 3-aminopicolinic acid, 3-hydroxypicolinic acid, 2-amino benzoic acid, 3-amino-4-hydroxybenzoic acid, 2,4,6-trihydroxyacetophenone (THAP), 1,4-dihydro-2-naphthoic acid, 3-indole acrylic acid, indole-2-carboxylic acid, and thioglycolic acid.
(4) The method for mass spectrometry according to any one of the above (1) to (3), wherein the amine is 3-aminoquinoline (3-AQ), and the acidic group-containing organic substance is p-coumaric acid (p-CA).
(5) The method for mass spectrometry according to any one of the above (1) to (4), wherein the liquid matrix comprises the amine and the acidic group-containing organic substance in a molar ratio of 1 : 5 to 20 : 1.
(6) The method for mass spectrometry according to any one of the above (1) to (5), wherein the negatively charged organic synthetic compound to be analyzed is an organic synthetic polymer compound.
(7) The method for mass spectrometry according to any one of the above (1) to (5), wherein the negatively charged organic synthetic compound to be analyzed is a complex compound.
(8) A liquid matrix for MALDI mass spectrometry of a negatively charged organic synthetic compound, the liquid matrix comprising an ionic liquid comprising an amine ion and an acidic group-containing organic substance ion.
(9) The liquid matrix according to the above (8), wherein the amine is selected from the group consisting of 3-aminoquinoline (3AQ), 1,1,3,3-tetramethylguanidine (TMG), n-butyl amine (BA), ethyl amine, N,N-diethyl amine (DEA), N,N-diethyl aniline, N,N-diethyl methyl amine, diethyl benzene amine, N,N-dimethyl amine, triethyl amine, tri-n-butyl amine, tri-n-propyl amine, ethanol amine, polyether tailed triethyl amine, polyester tailed triethyl amine, aniline, 2,4-dinitroaniline, pyridine, 2-pyridinepropanol (2PP), 2-ethylpyridine (2EP), 2-amino-4-methyl-5-nitropyridine, 3-aminoquinoline (3-AQ), 3-hydroxypyridine, 1-methylimidazole, 1-butyl-3-methylimidazole, 1-(1-hydroxypropyl)-3-methylimidazole, 1,3-dimethylimidazole, 1,5-diaminonaphthalene, 6-aza-2-thiothymine, and carbolines.
(10) The liquid matrix according to the above (8) or (9), wherein the acidic group-containing organic substance is selected from the group consisting of p-coumaric acid (p-CA), α-cyano-4-hydroxycinnamic acid (4-CHCA), α-cyano-3-hydroxycinnamic acid, 2,5-dihydroxybenzoic acid (DHB), 4-hydroxybenzoic acid, p-hydroxybenzoic acid, p-hydroxyphenylpyruvic acid, 3-hydroxypicolinic acid, 3,5-dimethoxy-4-hydroxycinnamic acid (sinapinic acid), 4-hydroxy-3-methoxycinnamic acid (ferulic acid), caffeic acid (3,4-dihydroxycinnamic acid), 5-methoxysalicylic acid, 2-(4-hydroxyphenylazo)benzoic acid (HABA), nicotinic acid, picolinic acid, 3-aminopicolinic acid, 3-hydroxypicolinic acid, 2-amino benzoic acid, 3-amino-4-hydroxybenzoic acid, 2,4,6-trihydroxyacetophenone (THAP), 1,4-dihydro-2-naphthoic acid, 3-indole acrylic acid, indole-2-carboxylic acid, and thioglycolic acid.
(11) The liquid matrix according to the above according to any one of the above (8) to (10), wherein the amine is 3-aminoquinoline (3-AQ), and the acidic group-containing organic substance is p-coumaric acid (p-CA).
(12) The liquid matrix according to the above according to any one of the above (8) to (11), wherein the liquid matrix comprises the amine and the acidic group-containing organic substance in a molar ratio of 1 : 5 to 20 : 1.

## Claims

1. A method for mass spectrometry of a negatively charged organic synthetic compound, the method comprising using, as a liquid matrix, an ionic liquid comprising an amine ion and an acidic group-containing organic substance ion.

2. The method for mass spectrometry according to claim 1, wherein the amine is selected from the group consisting of 3-aminoquinoline (3AQ), 1,1,3,3-tetramethylguanidine (TMG), n-butyl amine (BA), ethyl amine, N,N-diethyl amine (DEA), N,N-diethyl aniline, N,N-diethyl methyl amine, diethyl benzene amine, N,N-dimethyl amine, triethyl amine, tri-n-butyl amine, tri-n-propyl amine, ethanol amine, polyether tailed triethyl amine, polyester tailed triethyl amine, aniline, 2,4-dinitroaniline, pyridine, 2-pyridinepropanol (2PP), 2-ethylpyridine (2EP), 2-amino-4-methyl-5-nitropyridine, 3-aminoquinoline (3-AQ), 3-hydroxypyridine, 1-methylimidazole, 1-butyl-3-methylimidazole, 1-(1-hydroxypropyl)-3-methylimidazole, 1,3-dimethylimidazole, 1,5-diaminonaphthalene, 6-aza-2-thiothymine, and carbolines.

3. The method for mass spectrometry according to claim 1, wherein the acidic group-containing organic substance is selected from the group consisting of p-coumaric acid (p-CA), α-cyano-4-hydroxycinnamic acid (4-CHCA), α-cyano-3-hydroxycinnamic acid, 2,5-dihydroxybenzoic acid (DHB), 4-hydroxybenzoic acid, p-hydroxybenzoic acid, p-hydroxyphenylpyruvic acid, 3-hydroxypicolinic acid, 3,5-dimethoxy-4-hydroxycinnamic acid (sinapinic acid), 4-hydroxy-3-methoxycinnamic acid (ferulic acid), caffeic acid (3,4-dihydroxycinnamic acid), 5-methoxysalicylic acid, 2-(4-hydroxyphenylazo)benzoic acid (HABA), nicotinic acid, picolinic acid, 3-aminopicolinic acid, 3-hydroxypicolinic acid, 2-amino benzoic acid, 3-amino-4-hydroxybenzoic acid, 2,4,6-trihydroxyacetophenone (THAP), 1,4-dihydro-2-naphthoic acid, 3-indole acrylic acid, indole-2-carboxylic acid, and thioglycolic acid.

4. The method for mass spectrometry according to claim 1, wherein the amine is 3-aminoquinoline (3-AQ), and the acidic group-containing organic substance is p-coumaric acid (p-CA).

5. The method for mass spectrometry according to claim 1, wherein the liquid matrix comprises the amine and the acidic group-containing organic substance in a molar ratio of 1 : 5 to 20 : 1.

6. The method for mass spectrometry according to claim 1, wherein the negatively charged organic synthetic compound to be analyzed is an organic synthetic polymer compound.

7. The method for mass spectrometry according to claim 1, wherein the negatively charged organic synthetic compound to be analyzed is a complex compound.
